# EUROPEAN PATENT APPLICATION

(11) **EP 1 358 832 A1**
(43) Date of publication of application: **05.11.2003**
(21) Application number: 02009932.1
(22) Date of filing: 03.05.2002
(51) Int. Cl.: A47L 13/58

(54) **Bucket for a mop provided with a detergent dispensing arrangement**

(71) Applicant: Gagliano, Laura, 06065 Passignano sul Trasimeno (Perugia) (IT); Gagliano, Chiara, 06065 Passignano sul Trasimeno (Perugia) (IT)
(72) Inventor: Gagliano, Laura, 06065 Passignano sul Trasimeno (Perugia) (IT); Gagliano, Chiara, 06065 Passignano sul Trasimeno (Perugia) (IT)
(74) Representative: Bardini, Marco Luigi

(57) **Abstract**

A floor washing equipment, to be used in combination with a floor wiper having an absorbing mop head, comprising a container (6) for wringing the mop and collecting the soiled liquid expelled therefrom, and a compartment (3) for rinsing the mop in a detergent liquid. The equipment comprises also a tank (9) containing said detergent liquid, and means for feeding said detergent liquid in a controlled manner from the tank (9) to the rinsing compartment (3).

## Description

The present invention concerns the field of articles for the washing of floors both in houses and in public establishments. More particularly, the invention concerns a new equipment to be used in combination with a floor wiper having an absorbing mop head, in order to improve the efficacy of the washing.

Known systems of this type make use of a floor wiper with an absorbing mop head consisting of a bundle of cloth strips or fibers that extend from the bottom end of a broomstick, generally of a certain length. These systems also provide a rinsing receptacle over which there is suspended a basket-shaped for wringing the absorbing mop head, which for the sake of brevity will hereinafter be referred to simply as mop. Thanks to the basket, the user may wring the mop by simply forcing the stick axially against the basket, and therefore without having to bend down, without tiring his hands and without the same coming into contact with the liquid. The wringing basket only occupies a part of the top opening of the receptacle, so that the latter remains accessible for dipping the mop in the detergent liquid (water mixed with some sanitizing and/or generically detergent agents).

A fundamental drawback of the system described above consists of the fact that the liquid squeezed out of the mop, liquid that has inevitably become soiled as a result of the cleaning operations, drips back into the receptacle and thus becomes mixed with the detergent liquid. Practically, clean detergent liquid will no longer be available after the first squeezing of the mop, so that the efficacy of the sanitizing and detergent action will be seriously jeopardized. Obviously, the problem becomes more and more serious every time the mop is wrung, since the user is obliged to rinse the mop in a gradually dirtier liquid, having therefore a less and less effective sanitizing and detergent capability.

Past proposals aimed at solving this problem have included receptacles with two compartments, one provided with the wringing basket and therefore intended to receive the soiled water squeezed out of the mop, while the other contains the detergent liquid, to be used for dipping the squeezed mop. But this solution was likewise found to be inadequate, because even the squeezed mop is still dirtied and will therefore gradually soil the whole of the detergent liquid as it continues to be dipped into the rinsing compartment. In this case, once again, the user is left without detergent liquid of an adequate purity level practically from the very start of the operation.

The object of the present invention is therefore to solve the problem described above in a totally effective manner by providing an equipment for the washing of floors, to be used in combination with a floor wiper having an absorbing mop head, that will make it possible for the user to have detergent liquid of a high degree of purity and cleanness at his disposal even after repeated wringings and dippings of the mop, so that the washing of the floor will become far more efficient than is at present possible with the systems known to the state of the art.
This object is achieved with the floor washing equipment in accordance with the present invention, of which the essential characteristics are set out in the first of the appended claims. Other advantageous features are provided by the embodiments defined by the dependent claims.

The characteristics and advantages of the floor washing equipment in accordance with the present invention will result more clearly from the following description of embodiments thereof, which are to be considered purely as examples and not limitative, with reference to the attached drawings in which:
- figure 1 shows an exploded side elevation of a first embodiment of the equipment, with an intermediate cross section through the basic receptacle;
- figure 2 shows a top plan view of the equipment of figure 1, a rinsing water feeding tank being omitted for the sake of clarity;
- figure 3 shows an intermediate cross section view of a second embodiment of the equipment in accordance with the invention, together with the absorbing mop of a floor wiper broomstick in accordance with the prior art;
- figure 4 shows an enlarged view of the area enclosed by the circle IV of figure 3;
- figure 5 is an intermediate cross section view of a third embodiment of the equipment in accordance with the invention; and
- figures 6 and 7 show enlarged views of the areas enclosed by, respectively, circles VI and VII of Figure 5.

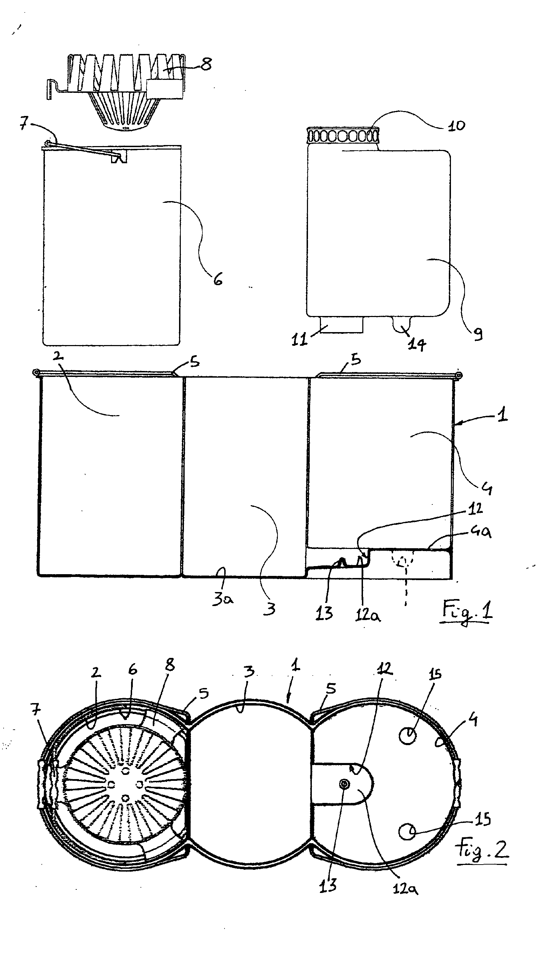

Referring to figures 1 and 2, a first embodiment of the floor washing equipment in accordance with the invention comprises a receptacle 1 that can be carried by means of a pair of articulated handles 5 and defines three consecutive and aligned compartments indicated, respectively, by the reference numbers 2, 3 and 4. In this particular example these compartments are generally cylindrical in shape, but with an incomplete development, due to receptacle 1 having a top plan outline consisting in a central circular segment and two lobes which extend symmetrically from respective chords of the central segment.

One of the two external compartments, indicated by the reference number 2, is intended to accommodate an appropriately sized coaxial bucket 6, which is provided with a handle 7 and a wringing basket 8 of the type known to the prior art for squeezing the mop. The other external compartment 4, on the other hand, serves to accommodate a tank 9 for feeding detergent liquid to the central compartment 3, said tank being once again of appropriate size and coaxial with its compartment. Tank 9 is closed airtight by a top plug 10, and provides a couple of pins 14, protruding from the bottom and having the function of assuring a correct and stable arrangement of the tank within compartment 4, as described further on.

The bottom of tank 9, on the side that is adjacent to the central compartment 3 when the tank is inserted in the receptacle 1, is provided with a further protrusion 11. In correspondence to protrusion 11 a hole is formed through which detergent liquid is fed from the tank, said hole being closed by an appropriate valve. Neither the hole nor the valve are shown in the figures. The closure valve, which as such forms part of the state of the art and is in any case shown in the figures illustrating a second embodiment of the invention that will be discussed further on, is a simple spring-controlled piston valve.

In the absence of an external force, the spring acts on the piston to keep the hole closed, whereas the application of an external axial pressure capable of compressing the spring will cause the piston to lift, thus freeing the outlet hole and permitting the detergent liquid to flow out.

The bottom 4a of external compartment 4, which is higher than the bottom 3a of the central compartment 3, includes a recess 12 capable of accommodating protrusion 11 of tank 9. Recess 12 is open on the side adjacent to compartment 3 and its bottom 12a slopes slightly downwards in the direction of this compartment. From the bottom 12a of this recess there rises a projection 13, which has the function of exerting the aforementioned axial force on the closure valve of tank 9 when the latter comes to rest on the bottom 4a of compartment 4. The bottom 4a is also provided with two seatings 15 to accommodate the location pins 14 projecting from the bottom of tank 9.

It will readily be understood that, by inserting tank 9 in compartment 4 and thus causing the opening of the outlet hole of the tank, the detergent liquid to be used for rinsing the mop will flow into recess 12 and thence into central compartment 3. This will lead to a lowering of the liquid level in tank 9 and, given the airtight closure of the tank by means of plug 10, a vacuum will thus form in the volume above the liquid surface. The outflow from tank 9 will stop when the liquid in the central compartment, where it is subject to atmospheric pressure, reaches a level such that the pressure heads in the central compartment and the tank are exactly balanced.

Given this arrangement, it will be possible to have an amount of detergent liquid in the central compartment 3 more or less commensurate with the absorption capacity of the mop. Upon commencement of the floor washing work, when the dry and clean mop is dipped into the detergent liquid for the first time, this amount will therefore become completely absorbed, thus triggering a replenishment outflow from tank 9, which will continue until the pressure head balance becomes re-established. After the mop has been passed over the floor for the first time and stands in need of rinsing, the user will first squeeze the mop against basket 8, thus causing soiled liquid to accumulate in bucket 6, and then dip it into the clean liquid contained in the rinsing compartment 3, which will thus become emptied and then replenished as previously explained.

This procedure will be repeated several times during the course of the floor-wiping operation, during which the user will always have at his disposal a mop soaked in clean liquid and therefore capable of assuring an utterly efficacious wiping and sanitizing action. On completion of the work the soiled liquid can be easily disposed of by lifting bucket 6 out of the equipment, while tank 9 can be similarly removed and replenished. When the tank is lifted out of its compartment 4, projection 13 will become disengaged from the valve, which will thus close and prevent any liquid that may have remained in the tank from spilling through the outlet hole.

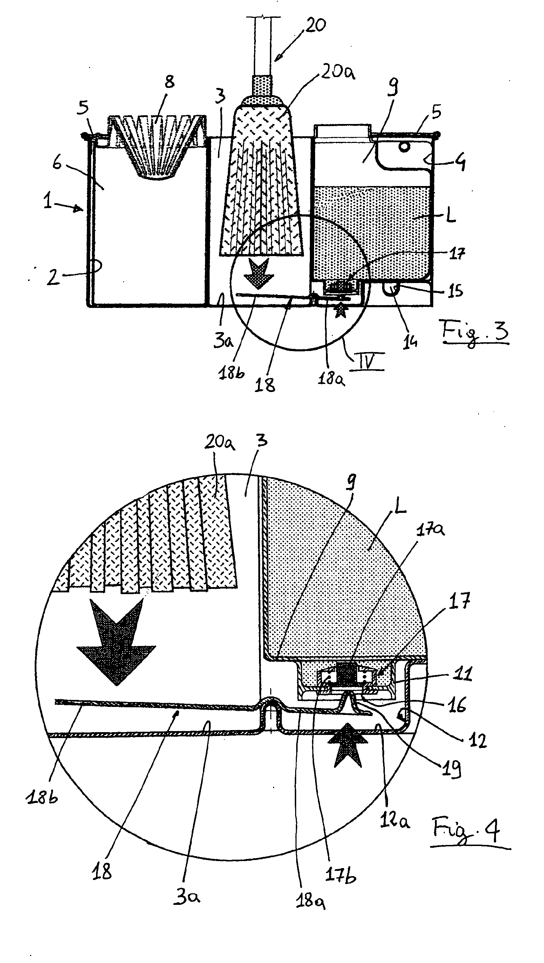

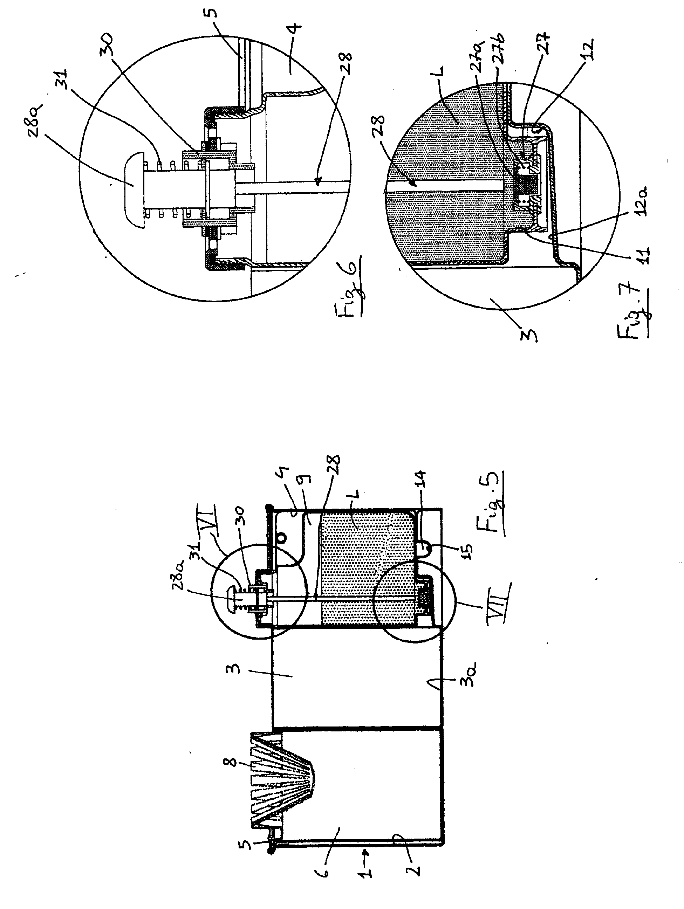

Turning now to figures 3 and 4, a second embodiment of the invention envisages a different solution for assuring a controlled feeding of the detergent liquid to the rinsing compartment 3. The overall structure of the equipment is similar to the previous embodiment and need not therefore be described again, identical or corresponding parts being indicated by the same reference numbers as before. In particular, figure 4 now shows the outlet hole 16 of tank 9, which is provided with a closure valve 17 comprising a piston 17a and a spring 17b, said valve being equal to the one mentioned in connection with the first embodiment.

In this case, however, valve 17, rather than being actuated by a fixed projection 13 when tank 9 is placed in compartment 4, is opened by a liftable projection 19. The latter, situated in recess 12, is integral to the actuating arm 18a of a lever 18, of which the operation arm 18b extends within the rinsing compartment 3.

When tank 9 is inserted in compartment 4 and comes to rest on the latter's bottom 4a, valve 17 abuts against projection 19. However, such abutment does not cause the valve to open, because the actuating arm 18a with projection 19 is free to rotate downwards, the bottom 12a of chamber 12 being arranged at a somewhat lower level than in the previous embodiment in order to permit this rotation.

As can be seen in figure 3, when the user dips the floor wiper, indicated by 20, into central compartment 3, the relevant mop 20a will press against the operation arm 18b of lever 18, thereby raising the latter's actuating arm 18a, so that projection 19 attached thereto will eventually come to open valve 17. Detergent liquid, shown shaded in the figure and indicated by L, will thus begin to flow into rinsing compartment 3 and will continue until the user lifts the floor wiper 20 out of the compartment, thus permitting the actuating arm 18a with projection 19 to rotate downwards again and consequently causing the closure of valve 17.

In this case the feeding of clean detergent liquid L to the rinsing compartment 3 is therefore mechanically controlled by the user every time he dips the mop, rather than as an automatic response to the pressure head unbalance generated between said compartment 3 and tank 9. In this case also there is obviously no need for plug 10 to assure an airtight closure of tank 9.

A third embodiment of the invention is illustrated by figures 5 to 7. Referring to these figures, it can be seen that the overall structure of the equipment is again similar to the previous embodiments and that identical or corresponding parts are indicated by the same reference numbers. As can be noticed particularly well in figure 7 valve 27, though substantially similar to the one used in the previous embodiments, has an inverted actuation arrangement, being no longer opened from below, but rather by a pressure exerted from within tank 9.

Said pressure is exerted on the piston 27a of the valve by means of a rod 28 that extends vertically within tank 9 and projects outside thereof by passing through closure plug 30, terminating with an operation end 28a. As shown in detail in figure 6, said operation end 28a is coaxially supported by the tank closure plug 30, having a tubular shape, so that rod 28 may slide between a raised position in which it does not interfere with piston 27a of valve 27 (figure 7) and a lowered position in which it will displace said piston and thus cause the valve to open. A spring 31 maintains rod 28 in the raised position when no external force is exerted on the operation end and provides an elastic hinder to its downward displacement.

The fact that the user can control the feeding of clean detergent liquid to the rinsing compartment 3 of the equipment is therefore a feature that this third embodiment has in common with the second. In this case, however, the nature of the user's mechanical intervention is different, since it takes the form of an operation on the top side of tank 9, and is therefore independently of the actual handling of the floor wiper.

It will be apparent that the equipment in accordance with the present invention overcomes the major drawback associated with the prior art, namely the fact that the user cannot always avail himself of a mop soaked in substantially unsoiled detergent liquid. Therefore, the mop is not capable of assuring effective removal of dirt from the floor and an adequate sanitation thereof. In fact, according to the invention, the soiled liquid squeezed out of the mop does not become mixed with the detergent liquid. The latter is fed in a controlled manner and only in such amounts as are effectively required for each rinsing of the mop. The remainder is preserved in tank 9, and is not in any way contaminated when the mop is dipped, remaining available for the entire duration of the work. The floor is washed far more effectively than is at present possible with similar systems constituting the state of the art. The aim of the invention is therefore fully attained and, what is more, with an equipment that is structurally simple, so that it implies limited production costs, besides being elementary as far as its operation is concerned.

In all three of the embodiments described herein bucket 6 intended to contain the soiled liquid could in general principle be permanently incorporated in receptacle 1, but the fact that it can be removed from compartment 2 constitutes an undoubted advantage, because this will greatly facilitate the operations of disposing of the dirty water and cleaning the equipment. Similar considerations apply as regards tank 9 from which the detergent liquid is fed.

As far as central compartment 3 is concerned, the one in which the mop is actually rinsed, none of the embodiments described above envisages the possibility of providing it with a removable container. It should nevertheless be borne in mind that the fundamental aspect of the invention is, in practice, the association to said rinsing compartment of a separate tank to provide a controlled feed of unsoiled detergent liquid. The previously described solutions for implementing this controlled feed, though advantageous on account of their structural and functional simplicity, can be replaced by alternative means capable of assuring the desired transfer from the tank to the rinsing compartment.

Having said this, it will readily be understood that the use of such different means for feeding the detergent liquid could make possible the insertion of a removable container also in this central compartment with the consequent advantage that the equipment can be cleaned more easily and effectively. Suitable means could - for example - take the form of a common and known type of pump-like dispenser capable of transferring the detergent liquid into the rinsing compartment from the above, that is to say, through its upper opening.

In the examples described above it has always been assumed that tank 9 was already filled with detergent liquid, i.e. water mixed with some detergent or sanitizing agent. Nevertheless, the tank could also be filled with pure water, the detergent or sanitizing agent being mixed only in compartment 3, possibly by means of a dispenser incorporated in tank 9 or in the broomstick of the floor wiper (as envisaged by an already known solution).

Other variations and/or modifications can be brought to the floor washing equipment in accordance with the present invention without for this reason departing from the scope of protection of the invention as defined by the claims hereinbelow.

## Claims

1. A floor washing equipment, to be used in combination with a floor wiper having an absorbing mop head, comprising a container (6) for wringing said mop and collecting the soiled liquid expelled therefrom, and a compartment (3) for rinsing said mop in a detergent liquid, **characterized in that** it comprises also a tank (9) containing said detergent liquid, and means for feeding said detergent liquid in a controlled manner from said tank (9) to said rinsing compartment (3).

2. An equipment according to claim 1, wherein said means for feeding the detergent liquid in a controlled manner comprise airtight closure means (10) of said tank (9) and a hole formed in said tank for the outflow of said liquid, said outflow being controlled by a pressure head unbalance between said tank (9) and said rinsing compartment (3).

3. An equipment according to claim 2, comprising a receptacle (1) defining, besides said dipping compartment (3), a compartment (4) in which said tank (9) is removably accommodated, said outflow hole of said tank being closed by a valve, projecting means being provided on the bottom (4a) of said tank-housing compartment (4) for engaging with said valve in order to actuate the opening thereof when the tank is inserted in receptacle (1).

4. An equipment according to claim 3, wherein said tank-housing compartment (4) has a bottom (4a) slightly higher than the bottom (3a) of said rinsing compartment (3), a recess (12) being formed in said higher bottom (4a) adjacently to said rinsing compartment (3) and having an open side towards the latter, said outflow hole of said tank (9) being formed in a protrusion (11) that when the tank is accommodated comes to be housed within said recess (12), from the bottom (12a) of which there rises a projection (13) for opening said valve.

5. An equipment according to claim 1, wherein said means for feeding the detergent liquid comprise a hole (16) formed in said tank (9) for the outflow of said liquid, a valve (17, 27) that closes said hole (16), and actuating means (18, 28) that can be operated from outside the tank in order to actuate the opening of said valve.

6. An equipment according to claim 5, wherein said tank-housing compartment (4) has a bottom (4a) higher than the bottom (3a) of said rinsing compartment (3), a recess (12) being formed in said higher bottom (4a) adjacently to said rinsing compartment (3) and having an open side towards the latter, said outflow hole of said tank (9) being formed in a protrusion (11) that when the tank is accommodated comes to be housed within said recess (12).

7. An equipment according to claim 6, wherein said means for actuating the valve comprise a lever (18) with an operation arm (18b) that extends into said rinsing compartment (3) and an actuating arm (18a) that extends inside said recess (12) and is capable of engaging with said valve (17) to bring about its opening.

8. An equipment according to claim 6, wherein said means for actuating the valve comprise a rod (28) that extends within said tank and has an operation upper end (28a), which projects from said tank, said rod being slidable between a raised position in which it does not interfere with said valve (27) and a lowered position in which it engages with said valve (27) and causes it to open.

9. An equipment according to any one of claims 3 to 8, wherein said valve (17, 27) comprises a piston (17a, 27a) and a hindering spring (17b, 27b) that in the absence of an external actuation maintains said piston (17a, 27a) in a closure position, said actuation of the valve providing an axial pressure on said piston (17a, 27a) to overcome the hindering action of said spring (17b, 27b).

10. An equipment according to any one of the previous claims, comprising means for dispensing a detergent agent into said rinsing compartment (3).

11. An equipment according to any one of the previous claims, wherein said receptacle (1), besides said rinsing compartment (3) and said compartment (4) that removably accommodates said tank (9), comprises also a compartment (2) that removably accommodates said container (6) for collecting the soiled liquid.
